# EUROPÄISCHE PATENTSCHRIFT

(11) **EP 1 302 043 B1**
(45) Veröffentlichungstag und Bekanntmachung des Hinweises auf die Patenterteilung: **02.11.2006**
(21) Anmeldenummer: 01953801.6
(22) Anmeldetag: 26.06.2001
(51) Int. Cl.: H04L 27/26, H04L 1/00

(54) **VERFAHREN ZUR ÜBERTRAGUNG VON DIGITALEN DATEN MITTELS RUNDFUNKSIGNALEN IM ORTHOGONALEN FREQUENZMULTIPLEX (OFDM)**
METHOD FOR THE TRANSMISSION OF DIGITAL DATA BY MEANS OF RADIO SIGNALS WITH ORTHOGONAL FREQUENCY DIVISION MULTIPLEXING (OFDM)
PROCEDE DE TRANSMISSION DE DONNEES NUMERIQUES AU MOYEN DE SIGNAUX RADIO EN MULTIPLEX PAR DIVISION DE FREQUENCE ORTHOGONALE (OFDM)

(30) Priorität: 04.07.2000 DE 10031803
(43) Veröffentlichungstag der Anmeldung: 16.04.2003
(73) Patentinhaber: ROBERT BOSCH GMBH, 70442 Stuttgart (DE)
(72) Erfinder: SCHULZE, Henrik, 59872 Meschede (DE); HOFMANN, Frank, 31139 Hildesheim (DE)
(86) Internationale Anmeldenummer: PCT/DE2001/002354
(87) Internationale Veröffentlichungsnummer: WO 2002/003640

(56) Entgegenhaltungen:
- US-A- 5 134 464
- US-A- 5 822 372
- US-E- R E36 430

## Beschreibung

### Stand der Technik

Die Erfindung geht aus von einem Verfahren zur Übertragung von digitalen Daten mittels Rundfunksignalen im orthogonalen Frequenzmultiplex (OFDM) nach der Gattung des unabhängigen Patentanspruchs.

Es ist bereits bekannt, dass digitale Rundfunksysteme wie DAB (Digital Audio Broadcasting) und DRM (Digital Radio Mondiale) entwickelt bzw. eingesetzt werden. DRM ist insbesondere für den Sendefrequenzbereich von unterhalb von 30 MHz gedacht. Auch bei solchen digitalen Rundfunkübertragungen kommt es aufgrund der Kanaleigenschaften und von Rauschen zu Fehlern bei den empfangenen Rundfunksignalen. Mittels der Kanalcodierung wird den zu übertragenden Nutzdaten Redundanz hinzugefügt, so dass solche Fehler in einer Empfangsvorrichtung korrigiert werden können. Es können jedoch nicht immer alle Fehler korrigiert werden. Insbesondere bei Audiodaten, aber auch bei anderen Daten werden die zu übertragenden Daten in Rahmen aufgeteilt. Die einzelnen Bits der zu übertragenden Daten sind dabei unterschiedlich empfindlich gegenüber Störungen. Daher ist eine unterschiedliche Fehlerrate bzw. ein ungleichmäßiger Fehlerschutz anzustreben.

In US 5,822,372 wird ein Mehrträgerübertragungssystem offenbart, das verschiedene Fehlerraten in einem Datenstrom unterstützt, indem Unterträgerübertragungscharakteristiken geändert werden. Ein Datenstrom wird in Unterströme aufgeteilt und den Unterträgern je nach Fehlerschutz zugeordnet.

Aus RE 36,430 ist es bekannt, die Modulation und/oder die Codiereffizienz, die einem Träger oder einem Set von Kehrträgern zugeordnet wird, zu variieren, z.B. in Abhängigkeit von der Bedeutung der Information, die übertragen werden soll. Dies wird für OFDM-Systeme verwendet.

US 5,134, 464 offenbart schließlich dass je nach Bedeutung der Daten diese unterschiedlich geschützt werden können. Die kann durch eine Fehlerkorrektur oder eine geeignete Modulationstechnik erreicht werden.

### Vorteile der Erfindung

Das erfindungsgemäße Verfahren zeigt Vorteile gemäß der Lehre von Anspruch 1. Das Verfahren zur Übertragung von digitalen Daten mittels Rundfunksignalen im orthogonalen Frequenzmultiplex (OFDM) nutzt, dass eine unterschiedliche Bitfehlerrate für unterschiedliche digitale Daten dadurch erreicht wird, dass die digitalen Daten, die zu unterschiedlichen Fehlerschutzklassen gehören, mit einer unterschiedlichen Sendeleistung versendet werden. Das wirkt sich direkt auf das Signal-zu-RauschVerhältnis aus und damit auf die Fehlerrate, denn je besser dieses Verhältnis ist, um so geringer ist die Fehlerrate. Dabei ist die Einteilung der Fehlerschutzklassen beliebig und auch, welche Leistung verwendet wird. Auch das Verhältnis der Länge der Fehlerschutzklassen kann hier beliebig gewählt werden. Dieses Verfahren ist effizient bezüglich der Übertragungsleistung. Erfindungsgemäß werden jedoch Fehlerschutzklassedaten in einem von den digitalen Daten getrennten logischen Kanal übertragen.

Durch die in den abhängigen Ansprüchen aufgeführten Maßnahmen und Weiterbildungen sind vorteilhafte Verbesserungen des im unabhängigen Patentanspruch angegebenen Verfahrens zur Übertragung von digitalen Daten mittels Rundfunksignalen im orthogonalen Frequenzmultiplex (OFDM) möglich.

Insbesondere ist es dabei von Vorteil, dass verschiedene Dienste und damit die diesen verschiedenen Diensten zugeteilten Daten eine jeweils unterschiedliche Bitfehlerrate im Empfänger erreichen, womit eine Unterscheidung bezüglich des Dienstes im Hinblick auf die akzeptable Bitfehlerrate möglich ist, damit ist eine effiziente Ausnutzung der vorhandenen Übertragungsbandbreite für die Übertragung von Nutzdaten gegeben. Weiterhin ist es dabei von Vorteil, dass bei digitalen Daten eines Dienstes diese in Gruppen eingeteilt werden können, wobei die Einteilung nach der Bedeutung der einzelnen Daten vorgenommen wird. Diesen Gruppen wird dann jeweils eine Fehlerschutzklasse zugeordnet. Beispielsweise wird bei einem MPEG-Audiorahmen die sogenannten Seiteninformationen (Skalenfaktoren, Prüfsummen, Rahmenkopf etc.) als fehlerempfindlicher betrachtet als die Hauptinformation (Audiodaten), weil Fehler bei der Seiteninformation sich wesentlich gravierender auswirken als bei der Hauptinformation. Daher werden mit dem erfindungsgemäßen Verfahren die Seiteninformationen und die Hauptinformationen jeweils als Gruppe betrachtet und der Seiteninformation eine Fehlerschutzklasse-zugeordnet, die einen besseren Fehlerschutz bietet als die, die für die die Hauptinformation verwendet wird.

Besonders vorteilhaft ist, dass die Fehlerschutzklassedaten mittels verschiedener Parameter der Fehlerschutzklassen und mittels Übertragungsparametern berechnet werden. Zu den Übertragungsparametern gehören die Coderate, die Stufigkeit der Modulation sowie die Anzahl der OFDM (Orthogonal Frequency Division Multiplex) Träger. Die Fehlerschutzklassedaten werden auch als Zellleistungsparameter bezeichnet.

Darüber hinaus ist es von Vorteil, dass die digitalen Daten mittels einer Winkelmodulation wie QPSK (Quadraturphasenumtastung) oder QAM (Quadraturamplitudenmodulation) übertragen werden, die eine hohe Übertragungsrate und eine ausreichende Störsicherheit bieten.

Desweiteren ist es von Vorteil, dass die Modulation der digitalen Daten, also mit der Winkelmodulation, in Abhängigkeit von der jeweiligen Fehlerschutzklasse durchgeführt wird. Dabei wird die Amplitude bei der Modulation des Signals gemäß der Leistung, die durch die Fehlerschutzklasse bestimmt wird, verändert. Dies geschieht beispielsweise durch einen Faktor, mit dem die Amplitude multipliziert wird. Die fehlerschutzklasseabhängige Leistung einzuführen, ist auch bei der Bildung des OFDM-Zellen-Multiplex möglich. Hier wird dann die jeweilige Zelle gemäß der zu beachtenden Fehlerschutzklasse mit einem Faktor multipliziert, um die entsprechende Leistung aufzuweisen.

Darüber hinaus ist es von Vorteil, dass die zu übertragenden Daten bezüglich der Zeit umsortiert werden und empfangsseitig wieder sortiert werden. Dies wird mit Zeitinterleaving bzw. Deinterleaving bezeichnet. Es verhindert vorteilhafterweise, dass zeitlich kurze Störungen eine fatale Auswirkung auf die zu übertragenden Daten aufweisen. Denn hier werden zeitlich zusammengehörende Daten für die Übertragung zeitlich künstlich getrennt.

Es ist dabei weiterhin von Vorteil, dass dem OFDM-Zellen-Multiplex Referenzpiloten hinzugefügt werden, um empfangsseitig eine Kanalschätzung und damit eine Entzerrung der empfangenen Daten durchzuführen.

Darüber hinaus ist es von Vorteil, dass die digitalen Daten Diensten zugeordnet werden und für einen jeweiligen Dienst eine jeweilige Fehlerschutzklasse vorliegt. Damit werden die jeweiligen Dienste mit einer jeweiligen Bitfehlerrate empfangsseitig erwartet.

Schließlich ist es auch von Vorteil, dass ein Sender bzw. eine Empfangsvorrichtung zur Durchführung des erfindungsgemäßen Verfahrens vorliegen, wobei der Sender und die Empfangsvorrichtung jeweils eine Berechnungseinheit aufweisen, die sendeseitig die Fehlerschutzklassedaten berechnet und empfangsseitig aus den Fehlerschutzklassedaten diese Auswirkung auf die empfangenen Daten berechnet, um dies bei der Demodulation zu berücksichtigen.

### Zeichnung

Ausführungsbeispiele der Erfindung sind in der Zeichnung dargestellt und werden in der nachfolgenden Beschreibung näher erläutert. Es zeigen Figur 1 eine Aufteilung der zu übertragenden digitalen Daten in zwei Rahmens, Figur 2 ein Blockdiagramm eines Senders und Figur 3 ein Blockdiagramm eines Empfängers.

### Beschreibung

Verschiedene Dienste, wie reine Datenübertragung, Audiodatenübertragung oder Videodatenübertragung, die mittels digitaler Rundfunkübertragungssysteme möglich sind, erfordern jeweils unterschiedliche Bitfehlerraten.

Erfindungsgemäß wird daher ein Verfahren zur Übertragung von digitalen Daten mittels Rundfunksignalen im orthogonalen Frequenzmultiplex (OFDM) verwendet, wobei die digitalen Daten in Fehlerschutzklassen aufgeteilt werden, und dann die digitalen Daten der jeweiligen Fehlerschutzklasse mit einer unterschiedlichen Leistung übertragen werden, so dass sie mit einer gemäß der Fehlerschutzklasse entsprechenden Bitfehlerrate empfangen werden. Fehlerschutzklassedaten, die es der Empfangsvorrichtung ermöglichen, die unterschiedlichen Leistungen aufgrund der Fehlerschutzklasse bei der Demodulation zu berücksichtigen, werden in einem getrennten logischen Kanal versendet. Diese Fehlerschutzklassedaten müssen dann vor den Nutzdaten demoduliert beziehungsweise ausgewertet werden. Die digitalen Datenübertragungen werden mit einer Winkelmodulation QPSK oder QAM übertragen. Die Modulation oder die Bildung des OFDM-Zellenmultiplexes werden in Abhängigkeit von der jeweiligen Fehlerschutzklasse durchgeführt. Dabei bestimmt die Fehlerschutzklasse eine leistungsmäßige Veränderung der digitalen Daten bei der Modulation oder der OFDM-Zellen. Die digitalen Daten werden Diensten zugeordnet, wobei diese Dienste eine unterschiedliche Fehlerschutzklasse aufweisen. Auch die digitalen Daten, die zu einem Dienst gehören, sind in Gruppen aufteilbar, wobei jeder Gruppe eine entsprechende Fehlerschutzklasse zugeordnet wird.

Hier werden die Daten im orthogonalen Frequenzmultiplex übertragen. Orthogonaler Frequenzmultiplex bedeutet, dass die zu übertragenden Daten auf eng beieinander liegende OFDM-Unterträger bei unterschiedlichen Frequenzen verteilt werden. Eine OFDM-Zelle ist dabei ein Datum von der Länge eines OFDM-Symbols, das sich auf einem OFDM-Unterträger befindet. Liegen also K-Träger vor, dann liegen K OFDM-Zellen vor. Alle K OFDM-Zellen bilden zusammen ein OFDM-Symbol. Die Verteilung auf verschiedene Frequenzen ist eine wirksame Maßnahme bei Funkübertragungen, um einer frequenzselektiven Dämpfung (Fading) entgegenzuwirken. Durch Umsortierung bezüglich der Zeit, also einem Zeitinterleaving, wird ein zeitselektives Störungssignal sich nicht drastisch auf die empfangenen digitalen Daten auswirken.

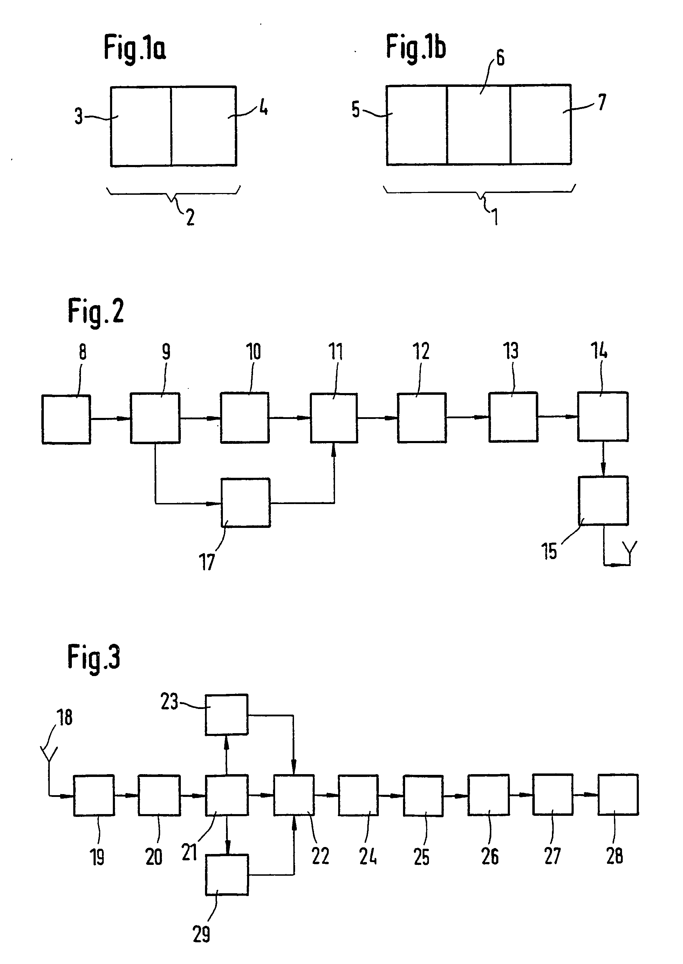

In Figur 1 a und b ist die Aufteilung der zu übertragenden digitalen Daten in zwei Rahmens dargestellt. Der Rahmen in Fig. 1 a ist für Servicedaten 2 vorgesehen, während der Rahmen in Fig. 1 b für die Nutzdaten verwendet wird. Die Rahmen sind im Zeitmultiplex vorhanden und stellen unterschiedliche logische Kanäle dar.

Die Nutzdaten 1 werden in Fehlerschutzklassen 5, 6 und 7 aufgeteilt. Die Fehlerschutzklassen 5, 6 und 7 sind hier unterschiedlich lang. Es sind hier beispielhaft drei Fehlerschutzklassen aufgeführt, wobei eine Aufteilung in mehr oder weniger Fehlerschutzklassen möglich ist. Auch die Länge der Fehlerschutzklassen und das Verhältnis der Längen zueinander ist beliebig. Hier gehören die Nutzdaten zu einem Dienst, einem Audioprogramm, so dass hier die Nutzdaten in Gruppen aufgeteilt sind, die jeweils einer Fehlerschutzklasse zugeordnet sind. Die Fehlerschutzklasse 5 betrifft die sogenannten Seiteninformationen, die einem Dekodierer angeben, wie die Audiodaten zu dekodieren sind. Daher sind die Seiteninformationen fehlerempfindlicher als die eigentlichen Audiodaten und deshalb versieht die Fehlerschutzklasse 5 die Seiteninformationen mit einer höheren Leistung und damit einer geringeren Bitfehlerrate. Die Fehlerschutzklasse 6 betrifft die Audiodaten und die Fehlerschutzklasse 7 Radiotext, wobei die Fehlerschutzklasse 6 einen höheren Fehlerschutz als die Fehlerschutzklasse 7 mit sich bringt.

Die Servicedaten 2 teilen sich auf in einen Teil 3 für Datenformate und Synchronisationsdaten und in einen Teil 4 für die Fehlerschutzklassedaten. Durch die Aufteilung in zwei Rahmen wird erreicht, dass die Fehlerschutzklassedaten 4 in einem unterschiedlichen logischen Kanal, der getrennt von den Nutzdaten ist, übertragen werden. Die Fehlerschutzklassedaten sind selbst durch eine Fehlerschutzklasse nicht berührt. Bei DAB würden die Fehlerschutzklassedaten beispielsweise im FIC (Fast Information Channel) übertragen werden, wobei der FIC getrennt von den zu übertragenden Nutzdaten ist und damit einen separaten logischen Kanal darstellt. Bei DRM werden die Fehlerschutzklassedaten beispielsweise im SDC (Service Description Channel) übertragen. Es ist möglich, dass die zu übertragenden digitalen Daten in mehr als zwei Rahmen aufgeteilt werden.

In Figur 2 ist als Blockdiagramm ein Sender dargestellt, der das erfindungsgemäße Verfahren zur Übertragung von digitalen Daten mittels Rundfunksignalen im orthogonalen Frequenzmultiplex (OFDM) verwendet. Eine Datenquelle 8 gibt Daten zu einer Quellencodierung 9 aus. Ein erster Datenausgang der Quellencodierung 9 führt zu einer Kanalcodierung 10. Ein zweiter Datenausgang der Quellencodierung 9 führt zu einer Berechnungseinheit 17. Ein Datenausgang der Kanalcodierung 10 führt zu einem ersten Dateneingang eines Modulators 11. An einen zweiten Eingang des Modulators 11 liegen Daten von der Berechnungseinheit 17 an. Der Modulator 11 ist mit seinem Datenausgang an eine Zeitumsortierung (Zeitinterleaving) 12 angeschlossen. An die Zeitumsortierung 12 schließt sich ein OFDM-Zellen-Multiplex 13 an. Der OFDM-Zellenmultiplex geht dann auf einen OFDM-Modulator 14, der seine Signale an eine Sendevorrichtung 15 übergibt. Die Sendevorrichtung 15 verwendet die Antenne 16 zum Versenden der Rundfunksignale.

Die Quellencodierung 9 führt an den Daten, die von der Datenquelle 8 kommen eine Quellencodierung, hier beispielhaft nach MPEG-2 oder MPEG-4, durch. Die Datenquelle 8 ist hier beispielsweise ein Tonträgerabspielgerät, wie ein CD-ROM-Laufwerk, ein Minidisc-Laufwerk oder eine Festplatte mit Audiodateien. Mittels der Quellencodierung 9 wird die Datenmenge reduziert, indem Irrelevanz aus den Daten entnommen wird. Die quellencodierten Daten werden von der Quellencodierung 9 zu der Kanalcodierung 10 übertragen. Weiterhin werden in der Quellencodierung 9 die quellencodierten Daten in Rahmen aufgeteilt und die digitalen Daten in den Rahmen werden Fehlerschutzklassen zugeordnet. Hier werden drei Fehlerschutzklassen 5, 6 und 7 wie in Figur 1 gezeigt, verwendet. Die Fehlerschutzklassen 5, 6 und 7 entsprechen hier Diensten, zu denen die jeweiligen Daten gehören. Diese Dienste sind hier ein Audioprogramm, ein Videodatenstrom und eine Dateienübertragung für eine Internetanwendung oder auch nur ein Audioprogramm. Die Daten über die Länge der Fehlerschutzklasse, die Anzahl der Fehlerschutzklassen und die vorgegebene Übertragungssicherheit der einzelnen Fehlerschutzklassen werden der Berechnungseinheit 17 als Eingabedaten zugeführt.

Die Kanalcodierung 10 führt an den quellencodierten digitalen Daten eine Kanalcodierung durch, indem den digitalen Daten Redundanz hinzugefügt wird, mittels derer eine Empfangsvorrichtung fehlerhafte Signale erkennen und gegebenenfalls korrigieren kann. Diese Fehlerkorrektur ist jedoch nur bis zu einer bestimmten Anzahl von Fehlern möglich. Liegt die Anzahl der Fehler darüber, ist keine Fehlerkorrektur mehr möglich. Im Modulator 11 werden die kanalcodierten digitalen Daten mit einer Winkelmodulation, hier QAM (Quadraturamplitudenmodulation) moduliert. Dabei werden die digitalen Daten einer festen Amplitude und Phase zugeordnet, mithin also einer komplexen Amplitude. Der Betrag der digitalen Daten wird gemäß der Fehlerschutzklasse verändert. D.h. die Amplitude wird mit einem Faktor multipliziert. Fehlerempfindliche Daten werden dabei bezüglich der Amplitude erhöht, also eine leistungsmäßige Erhöhung, und fehlerunempfindliche Daten werden weniger stark erhöht. Dabei ist sogar eine Absenkung der Leistung bezüglich der ursprünglichen Modulationsamplitude möglich. Durch diese Modulation entstehen Modulationssymbole, die im Folgenden als OFDM-Zellen weiter bezeichnet werden. Die Berechnungseinheit 17 hat hierbei das Leistungsniveau für die einzelnen Modulationssymbole in Abhängigkeit von der jeweiligen Fehlerschutzklasse berechnet.

Danach werden die OFDM-Zellen mit der Zeitumsortierung 12 umsortiert, um das sogenannte Zeitinterleaving zu verwenden. Dann wird im OFDM-Zellenmultiplex 13 der OFDM-Zellenmultiplex gebildet, indem den OFDM-Zellen zusätzlich Referenzpiloten hinzugefügt werden, so dass empfangsseitig eine Kanalschätzung möglich ist. Diese Kanalschätzung, die zu einer Entzerrung führt, ist nur bei kohärenten Übertragungssystemen möglich. Bei inkohärenten Übertragungssystemen wird keine Kanalschätzung und Entzerrung durchgeführt. Damit sind dann keine Referenzpiloten notwendig. Der OFDM-Zellenmultiplex wird dann im OFDM-Modulator 14 auf die einzelnen Träger verteilt. Dabei gelangt jede Zelle auf einen unterschiedlichen Träger und damit auf eine unterschiedliche Frequenz. In der Sendevorrichtung 15 werden dann die zu übertragenden Signale verstärkt, um dann mittels der Antenne 16 versendet zu werden.

Alternativ ist es hierbei möglich, dass die Berechnungseinheit 17 mit ihrem Datenausgang nicht mit dem Modulator 11, sondern mit dem OFDM-Zellen-Multiplex 13 verbunden ist, wobei dann im OFDM-Zellen-Multiplex 13 eine jeweilige Zelle bezüglich der zugeordneten Fehlerschutzklasse leistungsmäßig verändert wird. Dabei müssen dann die Fehlerschutzklassen 5, 6 und 7 ganze Vielfache von OFDM-Zellen umfassen. Die Fehlerschutzdaten die die Berechnungseinheit 17 berechnet hat, werden im OFDM-Zellenmultiplex den Servicedaten 2 wie in Figur 1 gezeigt, hinzugefügt.

In Figur 3 ist eine Empfangsvorrichtung als Blockschaltbild dargestellt. Eine Antenne 18 ist mit ihrem Ausgang an ein Empfangsteil 19 angeschlossen. Ein Datenausgang des Empfangsteils 19 führt an einen OFDM-Demodulator 20. Der Datenausgang des OFDM-Demodulators 20 führt an einen Dateneingang eines OFDM-Zellen-Demultiplexers 21. Ein erster Datenausgang des OFDM-Zellen-Demultiplexers führt zu einem ersten Dateneingang einer Kanalentzerrung 22. Ein zweiter Datenausgang des OFDM-Zellen-Demultiplexers 21 führt zu einem Dateneingang eines Kanalschätzers 23. Der Kanalschätzer 23 ist an einen zweiten Dateneingang der Kanalentzerrung 22 angeschlossen. An einen dritten Dateneingang der Kanalschätzung 22 ist eine Berechnungseinheit 29 angeschlossen. Ein Datenausgang der Kanalentzerrung 22 ist an eine Zeitsortierung 24 (Deinterleaving) angeschlossen. Der Datenausgang der Zeitsortierung 24 führt an einen Demodulator 25, der seinerseits an eine Kanaldecodierung 26 angeschlossen ist. Die Ausgangsdaten von der Kanaldecodierung 26 führen zu einem Dateneingang der Quellencodierung 27. Die Quellencodierung 27 ist wiederum ihrerseits an einen Dateneingang einer Datensinke 28 angeschlossen.

Die mit der Antenne 18 empfangenen Rundfunksignale werden von dem Sendeteil 19 gefiltert, verstärkt, in eine Zwischenfrequenz umgesetzt und digitalisiert. Diese digitalen Daten werden dann von dem OFDM-Demodulator in einen Datenstrom überführt. Der so entstandene Datenstrom geht dann zum OFDM-Zellen-Multiplex, wobei aus dem OFDM-Zellen-Multiplex die Referenzpiloten entnommen werden, so dass der Kanalschätzer 23 die Kanalschätzung durchführt, mittels derer der Entzerrer 22 die empfangenen Daten entzerrt. Die Berechnungseinheit 29 berechnet aus den Fehlerklassedaten, die aus dem OFDM-Zellen-Multiplex entnommen wurden, die entsprechenden Leistungen, mit denen die übertragenen Daten erfindungsgemäß bewertet wurden, so dass die Kanalentzerrung 22 diese bei der Entzerrung berücksichtigt. Die so entzerrten und um die fehlerschutzklasseabhängigen Leistung bereinigten Daten werden dann von der Zeitsortierung wieder in die richtige zeitliche Reihenfolge gebracht, so dass der Demodulator 25 dann aus den demodulierten Daten wieder die digitalen Daten ermitteln kann. Die demodulierten Daten werden dann von der Kanaldecodierung 26 der Kanaldecodierung unterzogen, d.h. die Redundanz wird zur Ermittlung der Bitfehler und gegebenenfalls zur Fehlerkorrektur verwendet. Die so korrigierten Daten werden dann von der Quellendecodierung 27 der Quellendecodierung zugeführt, wobei nach vorbestimmten Regeln den empfangenen Daten Irrelevanz wieder hinzugefügt wird. Die aus der Quellendecodierung 27 empfangenen Daten werden dann von der Datensinke 28 weiter verarbeitet. Dies ist beispielsweise ein Multimediabus, der mit einer Audiowiedergabe verbunden ist, um Audiodaten, die in den digitalen Daten enthalten sind, wiederzugeben. Als Datensinke kann auch eine Anzeige wirken, die die übertragenen Daten darstellt.

Alternativ ist es möglich, dass die Berechnungseinheit 23 mit ihrem Ausgang an den Demodulator 25 angeschlossen wird, so dass die Leistung hier die gemäß der Fehlerschutzklasse der jeweiligen Daten verändert wurde, rückgängig gemacht wird, um die Daten korrekt zu demodulieren. Würde dies nicht gemacht werden, dann hätten die modulierten Daten aufgrund der fehlerschutzabängigen Leistung eine andere Amplitude als dies aufgrund der zu übertragenden Informationen und damit der Modulation der Fall wäre. Damit würden also falsche Daten demoduliert. Deshalb muß die Berücksichtigung der fehlerklassenabhängigen Leistung vor der Demodulation einsetzen.

## Patentansprüche

1. Verfahren zur Übertragung von digitalen Daten mittels Rundfunksignalen im orthogonalen Frequenzmultiplex OFDM, wobei die digitalen Daten sendeseitig in Rahmen aufgeteilt werden, wobei die digitalen Daten zu OFDM-Zellen moduliert werden, wobei die OFDM-Zellen in einem OFDM-Zellen-Multiplex überführt werden und jede OFDM-Zelle einem OFDM-Unterträger zugeordnet wird, wobei die digitalen Daten in den Rahmen in Fehlerschutzklassen (5-7) aufgeteilt werden, wobei die OFDM-Zellen mit einer der jeweiligen Fehlerschutzklasse (5-7) entsprechenden Leistung übertragen werden, **dadurch gekennzeichnet, dass** Fehlerschutzklassedaten (4) in einem von den digitalen Daten getrennten logischen Kanal versendet werden, dass die Fehlerschutzklassedaten (4) einer Empfangsvorrichtung ermöglichen, die unterschiedlichen Leistungen aufgrund der Fehlerschutzklasse (5-7) bei der Demodulation zu berücksichtigen und dass empfangsseitig in Abhängigkeit von den Fehlerschutzklassedaten (4) die OFDM-Zellen zu den digitalen Daten demoduliert werden.

2. Verfahren nach Anspruch 1, **dadurch gekennzeichnet, dass** die digitalen Daten in den Rahmen wenigstens einem Dienst zugeordnet werden und dass dem wenigstens einem Dienst eine jeweilige Fehlerschutzklasse (5-7) zugeordnet wird.

3. Verfahren nach Anspruch 1 oder 2, **dadurch gekennzeichnet, dass** die digitalen Daten, die dem wenigstens einem Dienst zugeordnet werden, in Gruppen aufgeteilt werden, und dass jeder Gruppe eine jeweilige Fehlerschutzklasse (5-7) zugeordnet wird.

4. Verfahren nach Anspruch 1, 2 oder 3, **dadurch gekennzeichnet, dass** die Fehlerschutzklassedaten (4) mittels der Anzahl, der Länge und der Übertragungssicherheit der Fehlerschutzklassen (5-7) und mittels Übertragungsparametern erzeugt werden.

5. Verfahren nach Anspruch 4, **dadurch gekennzeichnet, dass** die OFDM-Zellen mit einer Winkelmodulation moduliert werden.

6. Verfahren nach Anspruch 5, **dadurch gekennzeichnet, dass** als die Winkelmodulation eine Quadraturamplitudenmodulation oder eine Quadraturphasenumtastung verwendet wird.

7. Verfahren nach Anspruch 5 oder 6, **dadurch gekennzeichnet, dass** die Modulation der digitalen Signale in Abhängigkeit von der jeweiligen Fehlerschutzklasse (5-7) durchgeführt wird.

8. Verfahren nach Anspruch 5 oder 6, **dadurch gekennzeichnet, dass** die OFDM-Zellen im OFDM-Zellen-Multiplex in Abhängigkeit von der jeweiligen Fehlerschutzklasse (5-7) leistungsmäßig verändert werden.

9. Verfahren nach einem der Ansprüche 1 bis 8, **dadurch gekennzeichnet, dass** die digitalen Daten sendeseitig hinsichtlich der Zeit umsortiert werden und empfangsseitig nach der Demodulation sortiert werden.

10. Verfahren nach einem der Ansprüche 1 bis 8, **dadurch gekennzeichnet, dass** die OFDM-Zellen sendeseitig hinsichtlich der Zeit umsortiert werden und empfangsseitig von der Demodulation sortiert werden.

11. Verfahren nach Anspruch 9 oder 10, **dadurch gekennzeichnet, dass** sendeseitig dem OFDM-Zellen-Multiplex Referenzpiloten hinzugefügt werden und dass empfangsseitig mittels der Referenzpiloten eine Kanalschätzung und eine Synchronisation durchgeführt wird.

12. Verfahren nach Anspruch 11, **dadurch gekennzeichnet, dass** mittels der Kanalschätzung eine Entzerrung der empfangenen Rundfunksignale erreicht wird, wobei die Fehlerschutzklassedaten (4) berücksichtigt werden.

## Claims

1. Method for transmitting digital data by means of broadcast signals in orthogonal frequency division multiplex OFDM, the digital data being divided into frames at the transmitting end, the digital data being modulated into OFDM cells, the OFDM cells being transferred in an OFDM cell multiplex and each OFDM cell being allocated to an OFDM subcarrier, the digital data in the frames being divided into error protection classes (5-7), the OFDM cells being transmitted with a power corresponding to the respective error protection class (5-7), **characterized in that** error protection class data (4) are transmitted in a logical channel separated from the digital data, that the error protection class data (4) enable a receiving device to take into consideration the different powers due to the error protection class (5-7) during the demodulation, and that, at the receiving end, the OFDM cells are demodulated into the digital data in dependence on the error protection class data (4).

2. Method according to Claim 1, **characterized in that** the digital data in the frames are allocated to at least one service and that a respective error protection class (5-7) is allocated to the at least one service.

3. Method according to Claim 1 or 2, **characterized in that** the digital data allocated to the at least one service are divided into groups and that a respective error protection clas (5-7) is allocated to each group.

4. Method according to Claim 1, 2 or 3, **characterized in that** the error protection class data (4) are generated by means of the number, the length and the transmission reliability of the error protection classes (5-7) and by means of transmission parameters.

5. Method according to Claim 4, **characterized in that** the OFDM cells are modulated with an angle modulation.

6. Method according to Claim 5, **characterized in that** a quadrature amplitude modulation or a quadrature phase shift keying is used as the angle modulation.

7. Method according to Claim 5 or 6, **characterized in that** the digital signals are modulated in dependence on the respective error protection class (5-7).

8. Method according to Claim 5 or 6, **characterized in that** the OFDM cells in the OFDM cell multiplex are changed in power in dependence on the respective error protection class (5-7).

9. Method according to one of Claims 1 to 8, **characterized in that** the digital data are resorted with respect to time at the transmitting end and are sorted after the demodulation at the receiving end.

10. Method according to one of Claims 1 to 8, **characterized in that** the OFDM cells are resorted with respect to time at the transmitting end and are sorted by the demodulation at the receiving end.

11. Method according to Claim 9 or 10, **characterized in that** reference pilots are added to the OFDM cell multiplex at the transmitting end and that a channel estimation and a synchronization are performed by means of the reference pilots at the receiving end.

12. Method according to Claim 11, **characterized in that** an equalization of the received broadcast signals is achieved by means of the channel estimation and at the same time the error protection class data (4) are taken into consideration.

## Revendications

1. Procédé de transmission de données numériques au moyen de signaux radio en multiplex par division de fréquence orthogonale OFDM, les données numériques côté émission étant divisées en cadres, les données numériques étant modulées en cellules OFDM, les cellules OFDM étant transmises dans un multiplex de cellules OFDM et chaque cellule OFDM étant associée à une sous-porteuse OFDM, les données numériques étant divisées dans les cadres en catégories de protection contre les erreurs (5-7), les cellules OFDM étant transmises à une puissance correspondant à l'une des catégories respective de protection contre les erreurs (5-7),
**caractérisé en ce que**
les données de catégorie de protection contre les erreurs (4) sont envoyées dans un canal logique séparé des données numériques, les données de catégorie de protection contre les erreurs (4) d'un dispositif de réception permettent de prendre en compte les différentes puissances en raison de la catégorie de protection contre les erreurs (5-7) lors de la démodulation, et côté réception les cellules OFDM sont démodulées en données numériques en fonction des données de catégorie de protection contre les erreurs (4).

2. Procédé selon la revendication 1,
**caractérisé en ce que**
les données numériques dans les cadres sont attribuées à au moins un service, et une catégorie respective de protection contre les erreurs (5-7) est attribuée à l'au moins un service.

3. Procédé selon la revendication 1 ou 2,
**caractérisé en ce que**
les données numériques attribuées à l'au moins un service sont divisées en groupes, et une catégorie respective de protection contre les erreurs (5-7) est attribuée à chaque groupe.

4. Procédé selon la revendication 1, 2 ou 3,
**caractérisé en ce que**
les données de catégorie de protection contre les erreurs (4) sont générées au moyen de la quantité, de la longueur et de la sécurité de transmission des catégories de protection contre les erreurs (5-7) et au moyen de paramètres de transmission.

5. Procédé selon la revendication 4,
**caractérisé en ce que**
les cellules OFDM sont modulées par une modulation angulaire.

6. Procédé selon la revendication 5,
**caractérisé en ce que**
comme modulation angulaire on utilise une modulation d'amplitude en quadrature ou un décalage de phase en quadrature.

7. Procédé selon la revendication 5 ou 6,
**caractérisé en ce que**
la modulation des signaux numériques est réalisée en fonction de la catégorie respective de protection contre les erreurs (5-7).

8. Procédé selon la revendication 5 ou 6,
**caractérisé en ce que**
les cellules OFDM sont modifiées suivant la puissance dans le multiplex de cellules OFDM en fonction de la catégorie respective de protection contre les erreurs (5-7).

9. Procédé selon l'une quelconque des revendications 1 à 8,
**caractérisé en ce que**
les données numériques sont classées côté émission par rapport au temps et côté réception après la démodulation.

10. Procédé selon l'une quelconque des revendications 1 à 8,
**caractérisé en ce que**
les données numériques sont classées côté émission par rapport au temps et côté réception par la démodulation.

11. Procédé selon la revendication 9 ou 10,
**caractérisé en ce que**
côté émission des pilotes de référence sont ajoutés au multiplex de cellules OFDM, et côté réception une évaluation de canaux et une synchronisation sont réalisées à l'aide des pilotes de référence.

12. Procédé selon la revendication 11,
**caractérisé en ce qu'**
on atteint un redressement des signaux radio reçus au moyen de l'évaluation des canaux, en tenant compte des données de catégorie de protection contre les erreurs (4).
